# EUROPÄISCHE PATENTSCHRIFT

(11) **EP 1 272 767 B1**
(45) Veröffentlichungstag und Bekanntmachung des Hinweises auf die Patenterteilung: **26.11.2003**
(21) Anmeldenummer: 01927853.0
(22) Anmeldetag: 03.04.2001
(51) Int. Cl.: F15B 21/08, F15B 13/08

(54) **VENTILANORDNUNG**
VALVE ARRANGEMENT
COMMANDE DE SOUPAPES

(30) Priorität: 06.04.2000 DE 20006295 U
(43) Veröffentlichungstag der Anmeldung: 08.01.2003
(73) Patentinhaber: FESTO AG & Co, 73734 Esslingen (DE)
(72) Erfinder: LEDERER, Thomas, 71394 Kernen (DE); FUSS, Martin, 73773 Aichwald (DE); WALDECK, Christian, 73760 Ostfildern (DE)
(74) Vertreter: Vetter, Hans, Dipl.-Phys. Dr.
(86) Internationale Anmeldenummer: EP0103740
(87) Internationale Veröffentlichungsnummer: WO01077534

(56) Entgegenhaltungen:
- EP-A- 0 610 501
- EP-A- 0 754 866
- EP-A- 0 860 609
- DE-A- 19 840 597
- DE-C- 4 413 657
- DE-U- 29 905 865
- SEEHAUSEN F-P: "DEZENTRALER AUFBAU VON VENTILEINHEITEN - MODULARE INTELLIGENZ" ÖLHYDRAULIK UND PNEUMATIK, KRAUSSKOPF VERLAG FUR WIRTSCHAFT GMBH. MAINZ, DE, Bd. 43, Nr. 3, März 1999 (1999-03), Seiten 172,175-176, XP000834216 ISSN: 0341-2660

## Beschreibung

Die Erfindung betrifft eine Ventilanordnung gemäß dem Oberbegriff des Anspruchs 1.

Der Oberbegriff des Anspruchs 1 gibt einen Stand der Technik wieder, wie er in der EP 0 754 866 A beschreiben ist. Durch das kennzeichnende Merkmal, dass die Steuereinrichtung mit einem Webserver versehen ist, kann die Ventilanordnung bzw. deren Steuereinrichtung in Vorteilhafter Weise über das Internet Kommunizieren, so daß Steuer- und Programmerfahrgänge, Zustandsinformationen und Sensorinformationen in variabler Komfortabler Weise über das Internet übertragen werden können. Die Steuerung, Überwachung und Programmierung der Ventilanordnung kann daher in variabler Weise von unterschiedlichen Stellen aus erfolgen.

Die erfindungsgemäße Ventilanordnung hat den Vorteil, dass sie als autarke Funktionseinheit beispielsweise in der Nähe von pneumatischen Antrieben angeordnet werden kann, die über die Ventilanordnung gesteuert werden. Durch die Möglichkeit der Zuführung von Sensorsignalen solcher Antriebe oder anderer Aktoren kann das mit der elektronischen Steuereinrichtung versehene Gehäuseteil den gesamten Prozess unabhängig von einer externen Steuerzentrale steuern. Auch externe Steuersignale zum Eingriff in den Programmablauf können dabei berücksichtigt werden. Somit kann die erfindungsgemäße Ventilanordnung bzw. ihr mit der Steuereinrichtung versehenes Gehäuseteil als dezentrale elektronische Steuerung von größeren Einheiten eingesetzt werden, die dann unabhängig von einer Zentralsteuerung arbeiten können. Die Zentralsteuerung kann dann lediglich dazu verwendet werden, das Steuer- oder Ablaufprogramm über ein Bus oder Netzwerk der Steuereinrichtung im Gehäuseteil zuzuführen, d.h., den dort vorhandenen Mikrorechner zu programmieren oder umzuprogrammieren. Die erfindungsgemäße Ventilanordnung kann dadurch bei gleicher Grundausführung sehr variabel eingesetzt werden.

Durch die in den Unteransprüchen aufgeführten Maßnahmen sind vorteilhafte Weiterbildungen und Verbesserungen der im Anspruch 1 angegebenen Ventilanordnung möglich.

Die Anschlussanordnung besitzt in vorteilhafter Weise mehrere als Schraubsteckanschlüsse und/oder Klemmanschlüsse und/oder Steckverbindungsanschlüsse ausgebildete Anschlüsse, um die erforderliche Anschlusskonfiguration für die jeweils verwendeten Anschlussleitungen zur Verfügung zu stellen.

Durch das zur Programmierung geeignete Display und/oder die als Einstell- und Programmiereinrichtung ausgebildete Tastatur am Gehäuseteil ist auch eine selbstständige Programmierung an Ort und Stelle alternativ zur Fernprogrammierung über eine zentrales Steuersystem möglich. Mit Hilfe der Tastatur und des Displays kann die Programmierung und können Programmänderungen beispielsweise menügeführt realisiert werden, wobei durch das Display eine komfortable Programmierung möglich ist.

Eine weitere Möglichkeit der Datenübertragung oder Programmierung ist dadurch gegeben, dass das Gehäuseteil mit einer Infrarot- oder Funkschnittstelle versehen ist. Über diese können Daten empfangen und Daten übertragen werden, z.B. Programmierdaten, Sensorsignaldaten, Diagnosedaten, Überwachungsdaten und/oder Servicedaten.

Ein großer Vorteil besteht auch darin, daß das Gehäuseteil lösbar an die Ventileinheit ansteckbar ist, wobei eine Kontaktanordnung vorgesehen ist, die beim Anstecken die elektrischen Verbindungen zu den Ventilen automatisch herstellt, so daß Kabelanschlüsse und Verkabelungen jeweils nicht erforderlich sind. Durch Auswechseln dieses Gehäuseteils kann bei eventuellen Störungen die gesamte elektronische Steuerung ausgewechselt werden. Ein weiterer Vorteil besteht darin, daß zur Programmierung das Gehäuseteil abgenommen und getrennt von den Ventilen beispielsweise an einem Schreibtisch oder Arbeitsplatz bei guten Sichtverhältnissen programmiert werden kann. Anschließend wird es wieder an die Ventileinheit angesteckt und kann dadurch seine Tätigkeit wieder aufnehmen und seine Aufgaben erfüllen.

Das Gehäuseteil ist vorzugsweise plattenartig ausgebildet und nimmt daher relativ wenig Platz in Anspruch. Bei einer Ausbildung der Ventile als plattenartige Ventile oder Plattenventile, die mit ihren Flachseiten aneinanderliegen, übergreift das Gehäuseteil die aneinanderliegenden Ventile vorzugsweise quer zur Ebene der Flachseiten.

Die Steuereinrichtung kann auch in vorteilhafter Weise mit einer Netzschnittstelle und/oder einem Modem zum Datenaustausch mit einem Netzwerk über Steckanschlüsse und/oder die Infrarot- oder Funkschnittstelle versehen sein. Dadurch sind auch drahtlose Abfragen und Einspeisungen von Daten oder Abfragen und Einspeisungen von Daten über ein Netzwerk, wie das Internet, möglich, beispielsweise Programmierdaten, Sensorsignaldaten, Diagnosedaten, Überwachungsdaten oder Servicedaten. Die Netzschnittstelle ist dabei vorzugsweise als Ethernet-Schnittstelle ausgebildet.

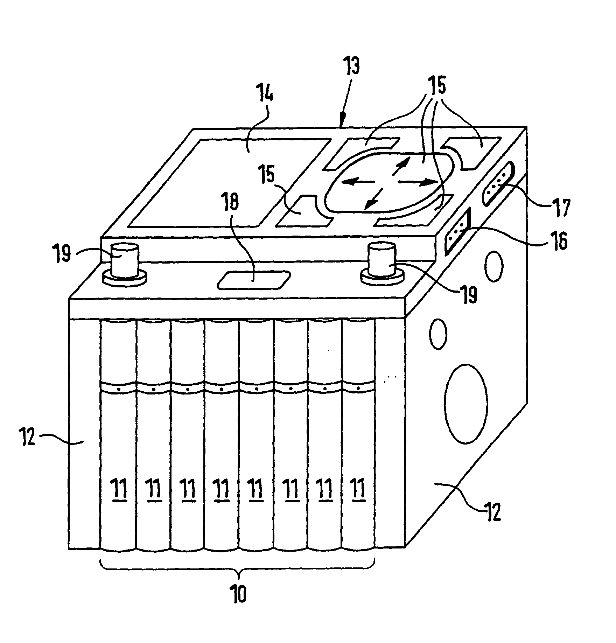

Ein Ausführungsbeispiel der Erfindung ist in der Zeichnung dargestellt und in der nachfolgenden Beschreibung näher erläutert. Die einzige Figur zeigt eine perspektivische Ansicht einer mit einem programmierbaren Gehäuseteil versehenen Ventilanordnung als Ausführungsbeispiel der Erfindung.

Bei der in der einzigen Figur dargestellten Ventilanordnung besteht eine Ventileinheit 10 aus acht über ihre Flachseiten aneinandergereihten Plattenventilen 11 mit im wesentlichen rechteckförmigem Plattenumriss. An die beiden äußeren Plattenventile 11 dieser Ventileinheit 10 ist jeweils noch eine entsprechend konturierte Endplatte 12 angereiht. Derartige Plattenventile sind beispielsweise aus der DE 44 13 657 bekannt und brauchen daher nicht näher beschrieben zu werden. Jedes Plattenventil umfasst beispielsweise ein Hauptventil und zwei zu dessen Ansteuerung dienende Vorsteuerventile, die durch elektrische Antriebe betätigbar sind, beispielsweise durch Elektromagnetanordnungen.

Die Anordnung von Plattenventilen 11 und Endplatten 12 wird von einem ebenfalls plattenartigen Gehäuseteil 13 überdeckt, wobei eine der senkrecht zu den Ebenen der Flachseiten der Plattenventile 11 verlaufende Flachseite des Gehäuseteils 13 an den gemäß der Figur oberen Schmalseiten der Plattenventile 11 anliegt. Nicht dargestellte zusätzliche Halteschrauben, Klemmanordnungen oder Rastanordnungen können zur besseren Fixierung des Gehäuseteils 13 dienen.

Das Gehäuseteil 13 enthält -in der perspektivischen Außenansicht nicht erkennbar - einen Mikrorechner, der die üblichen Bestandteile eines solches aufweist: Prozessor, Arbeitsspeicher, Programmspeicher, Schnittstellen und dergleichen. An der Oberseite des Gehäuseteils 13 sind ein Display 14, beispielsweise ein LCD-Display, und eine Tastatur 15 angeordnet, die mit dem Mikrorechner verbunden sind und für dessen Programmierung und Bedienung ausgebildet sind.

Die Tastatur ist als relativ einfache Tastatur mit Mehrfachfunktionen ausgebildet, jedoch kann prinzipiell auch eine umfangreichere Tastatur mit einer größeren Zahl von Tasten vorgesehen sein. Die Programmierung erfolgt beispielsweise menügeführt über das Display 14, so daß die Zahl der Tasten relativ klein gehalten werden kann. Alternativ oder zusätzlich können in an sich bekannter Weise auch Berührungstasten vorgesehen sein, die einen festen oder variablen Teil des Displays beanspruchen. Bei einer einfachen Ausführung kann das Display 14 und/oder die Tastatur 15 auch entfallen. Die Programmierung erfolgt dann ferngesteuert, wie dies später noch genauer erläutert wird.

Steuerausgänge des Mikrorechners sind über eine in der perspektivischen Darstellung ebenfalls nicht erkennbare Kontaktanordnung, die beispielsweise als Steckkontaktanordnung ausgebildet sein kann, mit den einzelnen Plattenventilen 11 verbunden, um diese steuern zu können. Beim Anstecken des Gehäuseteils 13 an die Ventileinheit 10 werden die elektrischen Anschlüsse zwischen Plattenventilen 11 und Mikrorechner über die Kontaktanordnung automatisch hergestellt. Zur Steuerung dienen üblicherweise Treiberstufen, die ebenfalls im Gehäuseteil 13 angeordnet sind. Eventuell an oder in den Plattenventilen 11 angeordnete Sensoren, beispielsweise Temperaturoder Drucksensoren oder Prüfsensoren für den Schaltzustand, sind ebenfalls über die Kontaktanordnung mit dem Mikrorechner verbunden, um die Überprüfung und Überwachung der Ventile sicherzustellen und um eventuelle Steuerdaten in Abhängigkeit der Sensorsignale festzulegen.

Zur elektrischen Stromversorgung der Plattenventile 11 und der elektronischen Komponenten im Gehäuseteil 13 dient eine nicht dargestellte Steckbuchse am Gehäuseteil 13. Hier kann beispielsweise eine Gleichspannung von 24 V eingespeist werden, wobei die Versorgung der Plattenventile 11 ebenfalls über diese Steckbuchse oder eine andere Kontaktanordnung erfolgen kann.

Eine Anschlussanordnung 16 am Gehäuseteil 13 dient zum Anschließen von externen Sensoren und/oder Steuersignalgebern an den Mikrorechner. Die Anschlussanordnung 16 ist als Steckverbindungs-Anschlussanordnung dargestellt, sie kann jedoch bei Bedarf auch als Schraubsteck-Anschlussanordnung oder als Klemmanschlussanordnung ausgebildet sein. Die Ventilanordnung kann beispielsweise in der Nähe einer durch sie gesteuerten Aktoranordnung, beispielsweise einer Anordnung von Linearantrieben angeordnet sein, deren Sensoren über die Anschlussanordnung 16 mit dem Mikrorechner im Gehäuseteil 13 verbunden sind. Hierdurch kann die gesamte Anlage durch die Ventilanordnung programmgesteuert arbeiten. Auch Signale von Steuersignalgebern, die Schaltsignale in Abhängigkeit von Parametern, Zustandsdaten oder manuellen Eingriffen abgeben, können den Mikrorechner über diese Anschlussanordnung 16 zugeführt werden.

Die Steuerung und/oder Programmierung des Mikrorechners kann über nicht dargestellte Busleitungen oder über ein Datennetzwerk erfolgen. Der Anschluss der Busleitungen erfolgt über eine Anschlussbuchse 17. Zur Aufbereitung der seriellen Bussignale kann der Mikrorechner selbst die Funktionen einer Busstation mit übernehmen, oder es ist eine separate Busstation zwischen der Anschlussbuchse 17 und dem Mikrorechner angeordnet. Weiterhin kann der Mikrorechner alternativ über eine Infrarotschnittstelle 18 gesteuert und/oder programmiert werden. Anstelle einer Infrarotschnittstelle kann auch eine Funkschnittstelle zum drahtlosen Empfang von Steuer- und Programmierdaten vorgesehen sein.

Die Anschlussbuchse 17 und/oder die Infrarotschnittstelle 18 oder eine Funkschnittstelle können auch zur Verbindung mit einem Datennetz ausgebildet sein. Hierzu weist der Mikrorechner einen Webserver, und eine Netzschnittstelle und/oder ein Modem auf oder ist mit derartigen Einrichtungen im Gehäuseteil 13 verbunden. Die Netzschnittstelle kann beispielsweise als Ethernet-Schnittstelle ausgebildet sein. Selbstverständlich ist es auch möglich, an Stelle einer einzigen Anschlussbuchse 17 separate Anschlussbuchsen für Busleitungen und Netzwerkanschlüsse vorzusehen.

Über die Anschlussbuchse 17 und/oder die Infrarotstelle 18 bzw. eine Funkschnittstelle können Daten nach beiden Richtungen von und zum Mikrorechner übertragen werden, beispielsweise Programmierdaten, Sensorsignaldaten, Diagnosedaten, Überwachungsdaten und/oder Servicedaten. Auf diese Weise ist eine Ferndiagnose und -überwachung der Ventilstation und der gegebenenfalls damit verbundenen Aktoranordnungen drahtlos oder über ein Netz, beispielsweise das Internet, möglich.

Gemäß dem eingangs angegebenen Stand der Technik können andere Ventileinheiten auch direkt über Steuerleitungen gesteuert werden, die an entsprechende Verbindungsbuchsen 19 angeschlossen werden können. Die Datenübertragung zwischen der beschriebenen Ventilanordnung und anderen Ventileinheiten kann parallel oder über einen internen seriellen Bus erfolgen.

Falls die Ventilanordnung an einer schwer zugänglichen Stelle positioniert ist, kann das Gehäuseteil 13 abgenommen und in günstigerer Umgebung, beispielsweise am Arbeitsplatz oder Schreibtisch, programmiert oder eingestellt werden, sofern eine manuelle Programmierung mittels einer Tastatur 15 vorgesehen ist. Anschließend kann es wieder an der Ventileinheit 10 angesteckt und gegebenenfalls zusätzlich fixiert werden. Bei Fehlfunktionen kann in jedem Falle in einfacher Weise das gesamte Gehäuseteil 13 mit sämtlichen elektronischen Komponenten ausgetauscht werden.

Mittels der Tastatur 15 können die einzelnen Plattenventile 11 auch direkt "manuell" betätigt werden, was entweder über den Mikrorechner erfolgt oder direkt Betätigung einer entsprechenden Umschalttaste für die Direktbetätigung. Zur manuellen Betätigung können auch die einzelnen Plattenventile 11 mit manuellen Schaltern oder Tasten versehen sein.

## Patentansprüche

1. Ventilanordnung mit einer aus mehreren aneinandergereihten, elektrisch betätigbaren Ventilen bestehenden Ventileinheit, an der ein Gehäuseteil angeordnet ist, das eine programmierbare als Mikrorechner ausgebildete elektronische Steuereinrichtung für die Ventile besitzt und mit diesen wenigstens über Steuerleitungen verbunden ist, mit wenigstens einer Netz- und/oder Busanschlussanordnung (17) zum Anschluss der Steuereinrichtung an ein externes Netz oder eine externe Busanordnung am Gehäuseteil (13), über das oder die die Steuereinrichtung programmierbar ist, und mit einer Anschlussanordnung (16) zum Anschließen von externen Sensoren und/oder Steuersignalgebern an die Steuereinrichtung, **dadurch gekennzeichnet, dass** die Steuereinrichtung mit einem Webserver versehen ist.

2. Ventilanordnung nach Anspruch 1, **dadurch gekennzeichnet, dass** die Anschlussanordnung (16) mehrere als Schraubsteckanschlüsse und/oder Klemmanschlüsse und/oder Steckverbindungsanschlüsse ausgebildete Anschlüsse besitzt.

3. Ventilanordnung nach Anspruch 1 oder 2, **dadurch gekennzeichnet, dass** das Gehäuseteil (13) ein zur Programmierung geeignetes Display (14) und/oder eine als Einstell- und Programmiereinrichtung ausgebildete Tastatur (15) besitzt.

4. Ventilanordnung nach einem der vorhergehenden Ansprüche, **dadurch gekennzeichnet, daß** das Gehäuseteil (13) mit einer Infrarot- oder Funkschnittstelle (18) zur Datenübertragung versehen ist, insbesondere Programmierdaten und/oder Sensorsignaldaten und/oder Diagnosedaten und/oder Überwachungsdaten und/oder Servicedaten.

5. Ventilanordnung nach einem der vorhergehenden Ansprüche, **dadurch gekennzeichnet, daß** das Gehäuseteil (13) lösbar an die Ventileinheit (10) ansteckbar ist, wobei eine Kontaktanordnung vorgesehen ist, die beim Anstecken die elektrischen Verbindungen zu den Ventilen (11) automatisch herstellt.

6. Ventilanordnung nach Anspruch 5, **dadurch gekennzeichnet, daß** das Gehäuseteil (13) auch im von der Ventileinheit (10) abgenommenen Zustand programmierbar ist.

7. Ventilanordnung nach einem der vorhergehenden Ansprüche, **dadurch gekennzeichnet, daß** das Gehäuseteil (13) plattenartig ausgebildet ist.

8. Ventilanordnung nach einem der vorhergehenden Ansprüche, **dadurch gekennzeichnet, daß** die Ventile als plattenartige Ventile ausgebildet sind, die mit ihren Flachseiten aneinanderliegen, und daß das Gehäuseteil (13) die aneinanderliegenden Ventile quer zur Ebene der Flachseiten übergreift.

9. Ventilanordnung nach einem der vorhergehenden Ansprüche, **dadurch gekennzeichnet, daß** die elektronische Steuereinrichtung mit an oder in den Ventilen (11) angeordneten Sensoren verbunden ist.

10. Ventilanordnung nach einem der vorhergehenden Ansprüche, **dadurch gekennzeichnet, dass** die Steuereinrichtung mit einer Netzschnittstelle und/oder einem Modem zum Datenaustausch mit einem Netzwerk über die Netz- und/oder Busanschlussanordnung (17) und/oder die Infrarot- oder Funkschnittstelle (18) versehen ist.

11. Ventilanordnung nach Anspruch 10, **dadurch gekennzeichnet, dass** die Netzschnittstelle als Ethernet-Schnittstelle ausgebildet ist.

## Claims

1. Valve assembly with a valve unit, comprised of several electrically actuable valves lined up together, to which is attached a housing section which has a programmable electronic control unit for the valves in the form of a microcomputer and is connected to the valves at least via control lines, with at least one network and/or bus connection assembly (17) for connection of the control unit to an external network or an external bus assembly on the housing section (13), through which the control unit may be programmed, and with a connection assembly (16) for the connection of external sensors and/or control signal transmitters to the control unit, **characterised in that** the control unit is provided with a web server.

2. Valve assembly according to claim 1, **characterised in that** the connection assembly (16) has several connections in the form of screw plug connections and/or clamp connections and/or plug-and-socket connections.

3. Valve assembly according to claim 1 or 2, **characterised in that** the housing section (13) has a display (14) suitable for programming and/or a keyboard (15) designed as a setting and programming unit.

4. Valve assembly according to any of the preceding claims, **characterised in that** the housing section (13) is provided with an infrared or radio interface (18) for data transmission, in particular programming data and/or sensor signal data and/or diagnostic data and/or monitoring data and/or service data.

5. Valve assembly according to any of the preceding claims, **characterised in that** the housing section (13) may be releasably plugged into the valve unit (10), with a contact assembly being provided which automatically creates the electrical connections to the valves (11) on plugging-in.

6. Valve assembly according to claim 5, **characterised in that** the housing section (13) may also be programmed when removed from the valve unit (10).

7. Valve assembly according to any of the preceding claims, **characterised in that** the housing section (13) is plate-shaped in form.

8. Valve assembly according to any of the preceding claims, **characterised in that** the valves are designed as plate-shaped valves with their flat sides adjoining one another, and that the housing section (13) overlaps the adjoining valves at right-angles to the plane of their flat sides.

9. Valve assembly according to any of the preceding claims, **characterised in that** the electronic control unit is connected to sensors located on or in the valves (11).

10. Valve assembly according to any of the preceding claims, **characterised in that** the control unit is provided with a network interface and/or a modem for data exchange with a network via the network and/or bus connection assembly (17) and/or the infrared or radio interface (18).

11. Valve assembly according to claim 10, **characterised in that** the network interface is in the form of an Ethernet interface.

## Revendications

1. Arrangement de soupapes avec une unité de soupapes consistant en plusieurs soupapes activables électriquement rangées l'une contre l'autre, est disposé sur une pièce de boîtier, qui possède un dispositif de commande pour les soupapes configuré comme micro-ordinateur programmable et est connecté à celles-ci par au moins des lignes de commande, avec au moins un réseau et/ou un dispositif de connexion par bus (17) pour connecter le dispositif de commande à un réseau externe ou à un dispositif externe de bus sur la pièce de boîtier (13), à travers lequel/lesquels le dispositif de commande est programmable, et avec un dispositif de connexion (16) pour connecter des capteurs externes et/ou des émetteurs de signaux de commande au dispositif de commande, **caractérisé en ce que** le dispositif de commande est prévu avec un serveur sur la Toile (Web) .

2. Arrangement de soupapes selon la revendication 1, **caractérisé en ce que** le dispositif de connexion (16) possède plusieurs connexions configurées comme des connexions à vis et/ou des connexions par serrage et/ou des connexions par fiche.

3. Arrangement de soupapes selon la revendication 1 ou 2, **caractérisé en ce que** la pièce de boîtier (13) possède un moniteur (14) adapté à la programmation et/ou un clavier (15) configuré comme appareil de réglage et de programmation.

4. Arrangement de soupapes selon l'une quelconque des revendications précédentes, **caractérisé en ce que** la pièce de boîtier (13) est pourvue d'une interface infrarouge ou radio (18) pour la transmission des données, en particulier les données de programmation et/ou les données des signaux des capteurs et/ou les données de diagnostic et/ou les données de surveillance et/ou les données de service.

5. Arrangement de soupapes selon l'une quelconque des revendications précédentes, **caractérisé en ce que** la pièce de boîtier (13) est enfichable de manière amovible dans l'unité de soupapes (10), un dispositif de contact étant prévu qui établit automatiquement lors de la connexion les liaisons électriques vers les soupapes (11).

6. Arrangement de soupapes selon la revendication 5, **caractérisé en ce que** la pièce de boîtier (13) est programmable également dans l'état démonté de l'unité de soupapes (10).

7. Arrangement de soupapes selon l'une quelconque des revendications précédentes, **caractérisé en ce que** la pièce de boîtier (13) est configurée en forme de plaque.

8. Arrangement de soupapes selon l'une quelconque des revendications précédentes, **caractérisé en ce que** les soupapes sont configurées comme des plaques, qui reposent les unes sur les autres par leur côté plat et que la pièce de boîtier (13) recouvre les soupapes les unes à côté des autres transversalement à la surface des côtés plats.

9. Arrangement de soupapes selon l'une quelconque des revendications précédentes, **caractérisé en ce que** le dispositif de commande électronique est connecté aux capteurs disposés sur ou dans les soupapes (11).

10. Arrangement de soupapes selon l'une quelconque des revendications précédentes, **caractérisé en ce que** le dispositif de commande est prévu avec une interface réseau et/ou un modem pour l'échange de données avec un réseau à travers un dispositif de connexion réseau et/ou bus (17) et/ou l'interface infrarouge ou radio (18).

11. Arrangement de soupapes selon la revendication 10, **caractérisé en ce que** l'interface réseau est configurée comme interface Ethernet.
